# EUROPÄISCHE PATENTANMELDUNG

(11) **EP 4 234 211 A1**
(43) Veröffentlichungstag der Anmeldung: **30.08.2023**
(21) Anmeldenummer: 22158381.8
(22) Anmeldetag: 24.02.2022
(51) Int. Cl.: B29C 64/10, B29C 64/40, B29C 71/00, B33Y 10/00, B33Y 30/00, B33Y 40/20, A61C 13/00

(54) **HERSTELLUNGSVERFAHREN FÜR EIN DENTALOBJEKT**

(71) Anmelder: Ivoclar Vivadent AG, 9494 Schaan (LI)
(72) Erfinder: HÄFELE, Clemens Andreas, 6800 Feldkirch (AT)
(74) Vertreter: Baldus, Oliver

(57) **Zusammenfassung**

Die vorliegende Erfindung betrifft ein Herstellungsverfahren für ein Dentalobjekt (100), mit den Schritten S101 eines Formens eines dreidimensionalen Dentalobjektes (100) aus einem lichthärtbaren Material (105); und eines Aushärtens S102 eines Teilbereiches (103) des Dentalobjektes (100) mittels einer Lichtquelle (101).

## Beschreibung

Die vorliegende Erfindung betrifft ein Herstellungsverfahren für ein Dentalobjekt, ein Herstellungsgerät für ein Dentalobjekt und ein Computerprogramm.

Aktuelle Geräte zur Nachvergütung von Dentalobjekten bestrahlen das gesamte Dentalobjekt großflächig und gleichzeitig von allen Seiten, um eine Aushärtung des verwendeten Herstellungsmaterials zu erreichen. Dadurch erfolgt ein Lichteintrag auf das Objekt, um eine Polymerisation zu erreichen. Hierdurch werden überall vergleichbare Materialeigenschaften erreicht.

Bei diesem Prozess können ein Schrumpfen und eine Erwärmung des Herstellungsmaterials stattfinden. Je nach Belichtungsstärke, Materialstärke oder Temperatur können lokale Unterschiede in der Schrumpfung entstehen, die zu einem Verzug und internen Spannungen führen. Durch eine simultane und gleichmäßige Belichtung des gesamten Bauteils wird außerdem die Möglichkeit einer lokal verbesserten Haftung oder Bearbeitbarkeit verhindert.

Es ist die technische Aufgabe der vorliegenden Erfindung, eine Herstellung eines Dentalobjektes mit anisotroper Aushärtung zu ermöglichen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Herstellungsverfahren für ein Dentalobjekt gelöst, mit den Schritten eines Formens eines dreidimensionalen Dentalobjektes aus einem lichthärtbaren Material; und eines Aushärtens eines Teilbereiches des Dentalobjektes mittels einer Lichtquelle. Indem nur ein Teilbereich des Dentalobjektes belichtet wird, bleibt ein anderer Teilbereich des Dentalobjektes unbelichtet. Dieser unbelichtete Teilbereich des Dentalobjektes kann für eine weitere Nachbehandlung reaktiv gehalten werden. Das Aushärten kann ein vollständiges oder ein partielles Aushärten des Teilbereiches umfassen. Das Aushärten kann auch stufenweise bis zum finalen Aushärten des Teilbereichs durchgeführt werden, beispielsweise durch partielles oder mehrmaliges Aushärten des Teilbereichs zu jeweils unterschiedlichen Zeitpunkten.

Zudem können in diesem Bereich eine lokal verbesserte Haftung oder Bearbeitbarkeit des Dentalobjektes erreicht werden. Die präzise Herstellung von Dentalobjekten mit gewünschten anisotropen Eigenschaften und eine Steuerung einer Nachvergütung zur Reduktion von internen Spannungen oder einem Verzug vereinfacht sich.

In einer technisch vorteilhaften Ausführungsform des Herstellungsverfahrens wird während des Aushärtens die Lichtquelle gegenüber dem Dentalobjekt und/oder das Dentalobjekt gegenüber der Lichtquelle bewegt. Dadurch wird beispielsweise der technische Vorteil erreicht, dass gezielt unterschiedliche Teilbereiche belichtet werden können.

In einer weiteren technisch vorteilhaften Ausführungsform des Herstellungsverfahrens wird eine Lichtintensität, eine Wellenlänge und/oder eine Belichtungsdauer der Lichtquelle auf Basis des Teilbereiches des Dentalobjektes ausgewählt. Dadurch wird beispielsweise der technische Vorteil erreicht, dass das Material in dem Teilbereich mit einer vorgegebenen Lichtmenge ausgehärtet werden kann. Ein Material eines anderen Teilbereichs kann wiederum mit einer anderen Lichtmenge ausgehärtet werden. Hierdurch können die Materialeigenschaften anisotrop verändert werden.

In einer weiteren technisch vorteilhaften Ausführungsform des Herstellungsverfahrens ist die Größe eines Belichtungsbereiches auf dem Dentalobjekt einstellbar. Die Größe der Einstellung des Belichtungsbereiches kann beispielsweise durch eine bewegliche Linse oder Spiegellinse erfolgen. Diese kann das Licht auf dem Dentalobjekt fokussieren, so dass nur ein kleiner Teilbereich belichtet wird. Wird die Linse defokussiert, wird ein größerer Teilbereich des Dentalobjekts belichtet. Die Position des Belichtungsbereiches auf dem Dentalobjekt kann durch einen beweglichen Spiegel eingestellt werden. Zudem kann ein digitales Spiegelgerät (DMD - Digital Mirror Device) mit einer rechteckigen Anordnung von beweglichen Mikrospiegeln oder eine Flüssigkristallmatrix verwendet werden, um ein vorgegebenes Lichtmuster auf das Dentalobjekt zu projizieren oder die Position des Belichtungsbereichs auf dem Dentalobjekt zu verändern. Die Flüssigkristallmatrix kann durch eine transparente Aktivmatrix-Flüssigkristallanzeige gebildet sein. Dadurch wird beispielsweise der technische Vorteil erreicht, dass das Dentalobjekt schnell und einfach in Teilbereichen ausgehärtet werden kann.

In einer weiteren technisch vorteilhaften Ausführungsform des Herstellungsverfahrens wird das Aushärten von Teilbereichen durch ein Belichtungsprogramm gesteuert. Das Belichtungsprogramm umfasst Daten, durch die die Belichtung des jeweiligen Teilbereiches gesteuert werden kann. Die Daten umfassen beispielsweise Daten über eine Größe und Position des Teilbereiches, eine Belichtungsdauer, eine Intensität des Lichtes oder eine Frequenz des Lichtes als Parameter. Für unterschiedliche Teilbereiche können unterschiedliche Parameter eingestellt werden. Dadurch wird beispielsweise der technische Vorteil erreicht, dass die Belichtung von Teilbereichen flexibel und je nach Dentalobjekt gesteuert werden kann.

In einer weiteren technisch vorteilhaften Ausführungsform des Herstellungsverfahrens wird das Belichtungsprogramm automatisch auf Basis von auftretenden Spannungen oder Schrumpfungen und/oder der Form des Dentalobjektes berechnet. Die Berechnung kann auch auf Basis von materialtypischen Eigenschaften durchgeführt werden. Dadurch wird beispielsweise der technische Vorteil erreicht, dass Spannungen oder Schrumpfungen des Dentalobjektes vermindert werden können.

In einer weiteren technisch vorteilhaften Ausführungsform des Herstellungsverfahrens bleibt ein Teilbereich des Dentalobjektes unbelichtet. Dadurch wird beispielsweise der technische Vorteil erreicht, dass gezielt Teilbereiche von einer Aushärtung ausgenommen werden können.

In einer weiteren technisch vorteilhaften Ausführungsform des Herstellungsverfahrens wird das dreidimensionale Dentalobjekt in einem dreidimensionalen Druckverfahren geformt. Das Druckverfahren wird beispielsweise von einem 3D-Drucker durchgeführt. Dadurch wird beispielsweise der technische Vorteil erreicht, dass sich das Dentalobjekt auf einfache Weise herstellen lässt.

In einer weiteren technisch vorteilhaften Ausführungsform des Herstellungsverfahrens ist die Lichtquelle ein Laser oder eine Leuchtdiode oder umfasst ein digitales Spiegelgerät oder eine Flüssigkristallmatrix. Dadurch wird beispielsweise der technische Vorteil erreicht, dass sich das Licht energieeffizient herstellen lässt.

In einer weiteren technisch vorteilhaften Ausführungsform des Herstellungsverfahrens wird ein Positionierelement zum Befestigen des dreidimensionalen Dentalobjektes beim Aushärten gebildet. Dadurch wird beispielsweise der technische Vorteil erreicht, dass das Dentalobjektes beim Aushärten oder bei einer anderen Bearbeitung an einer vorgegebenen Stelle gehalten werden kann.

In einer weiteren technisch vorteilhaften Ausführungsform des Herstellungsverfahrens umfasst das Positionierelement eine Sollbruchstelle, die nicht ausgehärtet wird. Dadurch wird beispielsweise der technische Vorteil erreicht, dass das Positionierelement auf einfache Weise abtrennt werden kann, ohne das Dentalobjekt zu beschädigen.

In einer weiteren technisch vorteilhaften Ausführungsform des Herstellungsverfahrens wird das Dentalobjekt während dem Aushärten an dem Positionierelement gehalten. Dadurch wird beispielsweise der technische Vorteil erreicht, dass das Dentalobjekt in Bezug zur Lichtquelle an einem vorgegebenen Ort gehalten werden kann.

In einer weiteren technisch vorteilhaften Ausführungsform des Herstellungsverfahrens wird der Schritt des Aushärtens in einer Formgebungseinrichtung durchgeführt. Dadurch wird beispielsweise der technische Vorteil erreicht, dass das teilbelichtete Dentalobjekt innerhalb eines einzigen Herstellungsgerätes hergestellt werden kann.

Gemäß einem zweiten Aspekt wird die technische Aufgabe durch ein Herstellungsgerät für ein Dentalobjekt mit einer Belichtungseinrichtung zum Aushärten eines Teilbereiches des Dentalobjektes mittels einer Lichtquelle gelöst. Das Herstellungsgerät kann eine Formgebungseinrichtung zum Formen eines dreidimensionalen Dentalobjektes aus einem lichthärtbaren Material umfassen. Durch das Herstellungsgerät für das Dentalobjekt werden die gleichen technischen Vorteile wie durch das Herstellungsverfahren nach dem ersten Aspekt erreicht.

Gemäß einem dritten Aspekt wird die technische Aufgabe durch ein Computerprogramm mit Befehlen gelöst, die bei der Ausführung des Computerprogramms durch ein Herstellungsgerät dieses veranlassen, ein Aushärten eines Teilbereiches eines Dentalobjektes mittels einer Lichtquelle auszuführen. Durch das Computerprogramm für das Dentalobjekt werden die gleichen technischen Vorteile wie durch das Herstellungsverfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Ansicht eines Herstellungsgeräts.
- Fig. 2: eine schematische Ansicht eines Dentalobjekts mit einem Positionierelement;
- Fig. 3: eine schematische Ansicht von Positionierelementen; und
- Fig. 4: ein Blockdiagramm eines Herstellungsverfahrens.

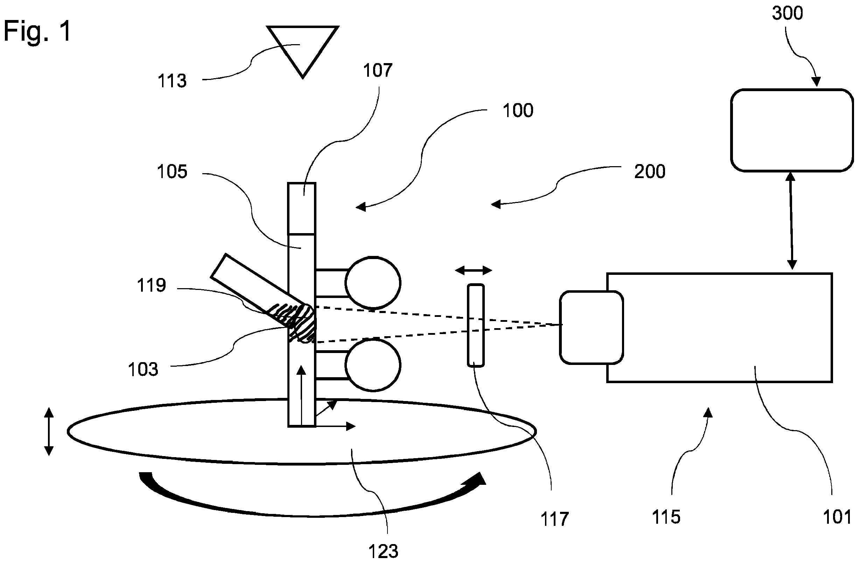

Fig. 1 zeigt eine schematische Ansicht eines Herstellungsgeräts 200 für ein teilbelichtetes Dentalobjekt 100. Das Dentalobjekt 100 ist beispielsweise eine dentale Restauration, wie beispielsweise eine Vollprothese, eine Teilprothese, ein Zahnkranz, eine Prothesenbasis, eine Krone, eine Brücke, ein Veneer, ein Abutment, ein Inlay oder ein Onlay. Das Dentalobjekt 100 ist aus einem oder mehreren Materialien 105 gebildet, die mittels Lichts ausgehärtet werden können, wie beispielsweise (Meth)acrylate oder Polyester in Gegenwart eines geeigneten Photoinitators.

Das Herstellungsgeräts 200 kann eine Formgebungseinrichtung 113 zum Formen eines dreidimensionalen Dentalobjektes 100 aus einem lichthärtbaren Material 105 umfassen. Die Formgebung des Dentalobjekts 100 kann beispielsweise durch die Formgebungseinrichtung 113 mittels eines dreidimensionalen Druckverfahrens erfolgen, bei dem das Material 105 Schicht für Schicht aufgetragen wird um so schichtweise die dreidimensionale Form zu erzeugen. Das Druckverfahren wird von einem 3D-Drucker ausgeführt.

Das Herstellungsgerät 200 ist geeignet, gezielt ausgewählte Teilbereiche 103 des Dentalobjekts 100 zu belichten. Hierfür kann für jeden Teilbereich 103 des Dentalobjekts 100 eine unterschiedliche Lichtintensität, eine Wellenlänge oder eine Belichtungsdauer gewählt werden. Das Herstellungsgerät umfasst zu diesem Zweck eine Belichtungseinrichtung 115 mit einer Lichtquelle 101. Die Lichtquelle 101 ist beispielsweise eine Leuchtdiode, ein Laser oder eine Laserdiode, die Licht emittiert, mit dem das Material 105 ausgehärtet werden kann. Um die Größe eines Belichtungsbereichs 119 einzustellen, umfasst das Herstellungsgerät 200 beispielsweise eine bewegliche Linse 117. Mit der Linse 117 kann die Größe des Belichtungsbereichs 119 eingestellt werden. Ist das Dentalobjekt 100 im Fokus der Linse 117 ist der Belichtungsbereichs 119 am kleinsten. Wird das Dentalobjekt 100 aus dem Fokus der Linse 117 bewegt, vergrößert sich der Belichtungsbereichs 119 entsprechend.

Um die ausgewählten Teilbereiche 103 vor der Lichtquelle 101 anzuordnen, umfasst das Herstellungsgerät 200 eine Bewegungseinrichtung 123, wie beispielsweise einen Drehteller. Mit Bewegungseinrichtung 123 kann das Dentalobjekt 100 während des Aushärtens gegenüber der Lichtquelle 101 bewegt werden. Die Bewegungseinrichtung 123 kann das Dentalobjekt 100 für der Lichtquelle 101 gedreht und in einer Höhe verfahren werden. Dadurch lässt sich jeder Teilbereich 103 vor der Lichtquelle 101 anordnen und einzeln belichten. Allerdings kann auch die Lichtquelle 101 gegenüber dem Dentalobjekt durch die Bewegungseinrichtung 123 bewegt werden. Die Bewegungseinrichtung kann beispielsweise auch durch einen Roboterarm gebildet sein. Mit den die Lichtquelle 101 oder das Dentalobjekt in allen drei Raumdimensionen bewegbar ist.

Ein Computer 300 kann eine Belichtungsstrategie für das Dentalobjekt 100 berechnen und eine Nachvergütung basierend auf den Formdaten und den Anforderungen an die jeweiligen Teilbereiche 103 durchführen. Der Computer 300 steuert die Bewegungseinrichtung 123 und die Lichtquelle 101 gemäß einem Belichtungsprogramm. In dem Belichtungsprogramm ist gespeichert, welcher Teilbereich 103 des Dentalobjekts 101 mit welcher Intensität, Frequenz, Wellenlänge und Belichtungsdauer belichtet werden soll. Je nach Teilbereich 103 können unterschiedliche Parameter für die Intensität, Frequenz, Wellenlänge und Belichtungsdauer eingestellt werden. Zudem kann die Größe des Belichtungsbereiches 119 und die Position und Orientierung der Lichtquelle 101 gegenüber den Dentalobjekt 101 in dem Belichtungsprogramm gespeichert sein.

Der Computer 300 umfasst einen digitalen Speicher für das Belichtungsprogramm und einen Prozessor zum Steuern und Verarbeiten von Befehlen des Belichtungsprogramms, die ein selektives Aushärten des Teilbereiches 103 des Dentalobjektes 100 steuern. Der Computer 300 kann ein Teil des Herstellungsgeräts 200 sein.

Das Belichtungsprogramm kann automatisch auf Basis von zu erwartenden auftretenden Spannungen oder Schrumpfungen und/oder der zu erzielenden Form des Dentalobjektes 100 berechnet werden. Ist die Form des Dentalobjektes 100 bekannt, lässt sich berechnen, wie die Lichtquelle 101 zum Dentalobjekt angeordnet ist, um einen bestimmten Belichtungsbereich 103 auszuhärten. Bei einigen Materialien 105, wie beispielsweise (Meth)acrylaten, ergibt sich nicht nur eine Photopolymerisation, sondern auch eine gleichzeitige Schrumpfung und Erwärmung des Materials 105. Hierbei kann sich im Dentalobjekt 100 aufgrund der lokal unterschiedlichen Belichtungsstärke, Materialstärke oder Temperatur entsprechende Unterschiede in einer Schrumpfung oder inneren Spannungen oder einem Verzug des Dentalobjektes ergeben.

Eigenschaften des Dentalobjektes 100, wie beispielsweise eine Oberflächenreaktivität, können schon beim digitalen Design vorbestimmt werden. Für das Belichtungsprogramm kann eine optimale Nachvergütungsstrategie zur präzisen Fertigung des Dentalobjektes 100 berechnet werden. Dabei kann der erwartete Verzug für das Dentalobjekt 100 berechnet werden, so dass dieser vollständig kompensiert wird. Gleiches gilt für eine Schrumpfung von keramischen Materialien bei deren Sinterung.

Durch das Herstellungsgerät 200 können Dentalobjekte 100 mit anisotropen Eigenschaften erzeugt werden. Das Dentalobjekt 100 umfasst dann beispielsweise sowohl härtere als auch weichere Teilbereiche 107. Zudem lassen sich Unterstützungsstrukturen (Supportstrukturen) leichter entfernen, wenn eine Verbindungsstelle unausgehärtet bleibt. Eine Materialschrumpfung und ein mechanischer Verzug des Dentalobjektes 100 kann gezielt beeinflusst werden. Eine Wärmeentwicklung kann in verschiedenen Teilbereichen aufeinander abgestimmt werden. Indem bestimmte Teilbereiche 103 belichtet werden und andere Teilbereiche 107 nicht belichtet werden, können bestimmte Teilbereiche 107 für Nachbearbeitungen, wie beispielsweise Verklebungen, reaktiv gehalten werden. Zudem können Teilbereiche 103, die bei einer herkömmlichen Belichtung aufgrund einer Geometrie des Dentalobjektes 100 im Schatten liegen würden, gezielt zur Belichtung gebracht werden.

Bei der Nachbearbeitung von gewählten Teilbereichen 103 wird eine Reaktivitätssteuerung des Materials 105 erreicht. Idealerweise erfolgt eine Planung der Nachvergütung, sobald eine Datei zur Verfügung steht, die die räumliche Form des Dentalobjektes 100 beschreibt, wie beispielsweise eine stl-Datei (STL - Stereolithographie). Der Computer kann dann errechnen, wie das Dentalobjekt ideal zu belichten ist.

Das Herstellungsgerät 200 kann in einer Formgebungseinrichtung 113, wie beispielsweise einem 3D-Drucker oder einer Fräseinrichtung integriert sein, so dass die die Formgebung als auch die Nachvergütung in ein und demselben Gerät durchgeführt werden können. Zudem kann das Herstellungsgerät 200 eine Heizung, eine Kühlung, und/oder eine Schutzgasvorrichtung für das Dentalobjekt umfassen. Durch die Schutzgasvorrichtung wird das Dentalobjekt 100 in einer abgeschlossenen Schutzgasatmosphäre gehalten, wie beispielsweise in einer Stickstoffatmosphäre.

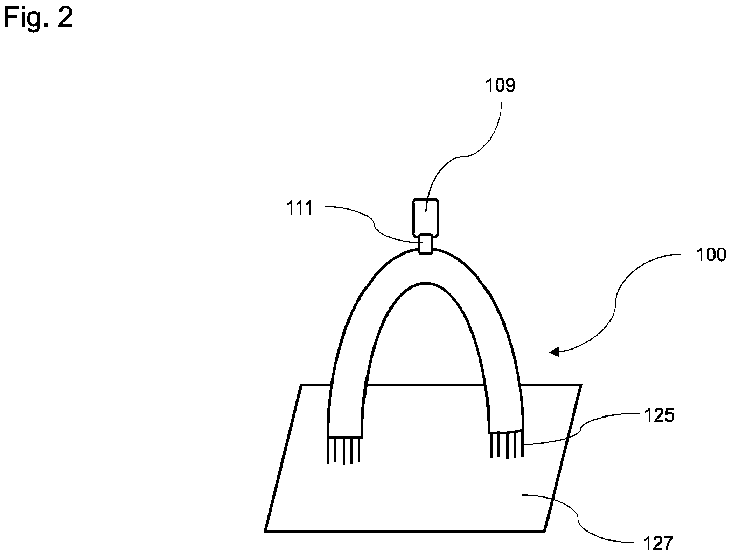

Fig. 2 zeigt eine schematische Ansicht eines Dentalobjekts 100 mit einem Positionierelement 109, wie beispielsweise einen Unterkieferzahnbogen. Bei einer Positionierung des Dentalobjektes 100 auf einer Bauplattform beim dreidimensionalen Drucken wird oft lediglich auf eine gute Positionierung der Supportstrukturen und Druckbarkeit des Dentalobjektes 100 geachtet. Eine mit mehreren Dentalobjekten 100 bestückte Bauplattform eines Stereolithografiegeräts kann allerdings Probleme bei der Nachverarbeitung verursachen.

Insbesondere können sich geometrische Anordnungen ergeben, die für eine Reinigung oder eine Nachvergütung nicht ideal sind. Beispielsweise kann die Reinigung in einem Bad oder die gleichmäßige Belichtung durch eng stehende Dentalobjekte 100 erschwert sein. So sind Systeme, die mit rührenden Reinigungsmedien arbeiten, unter Umständen nicht in der Lage, alle Dentalobjekte 100 gleichmäßig zu reinigen. Um einen besseren Reinigungseffekt zu erzielen, wird zum Teil auf Ultraschall gesetzt. Dabei wird das noch unvergütete Bauteil aber sehr starken Kräften ausgesetzt.

An dem Dentalobjekt 100 befindet sich daher das Positionierelement 109, an dem das Dentalobjekt 100 bei einer Bearbeitung im Rahmen der Nachvergütung gehalten wird. Das Positionierelement 109 ist durch eine geometrische Form gebildet und ermöglicht beispielsweise eine umgekehrte Positionierung des Dentalobjektes 100 auf dem Kopf. Das Positionierelement 109 ermöglicht eine Repositionierung des Dentalobjektes 100 bei der Nachverarbeitung. Beispielsweise kann das Dentalobjekt an dem Positionierelement 109 durch einen Roboterarm gehalten und bewegt werden.

Das Positionierelement 109 ist beispielsweise durch einen zylinderförmigen Abschnitt gebildet, der über eine Sollbruchstelle 111 mit dem übrigen Dentalobjekt 100 gebildet ist. Das Positionierelement 109 wird zusammen mit dem übrigen Dentalobjekt 100 in einen dreidimensionalen Druckverfahren gedruckt und anschließend selektiv belichtet. Dabei wird die Sollbruchstelle 11 keine Belichtung ausgesetzt, so dass das Positionierelement 109 nach der Nachvergütung auf einfache Weise entfernt werden kann. Durch das Positionierelement 109 kann eine umfassende selektive Belichtung für die Nachvergütung erreicht werden.

Zudem können an dem Dentalobjekt 100 auch säulenförmige Unterstützungsstrukturen 125 (Supportstruktur) angeordnet sein, durch die das Dentalobjekt 100 an einer Bauplattform 127 bei der Herstellung abgestützt wird. Die Unterstützungsstrukturen 125 ermöglichen den Aufbau des Dentalobjektes 100 auf der Bauplattform 127. Die Unterstützungsstrukturen 125 werden zusammen mit den Dentalobjekt 100 gedruckt und können ebenfalls einem selektiv durch das Herstellungsgerät 200 belichtet werden.

Durch das Positionierelement 109 kann eine definierte Repositionierung des Dentalobjektes 100 auf der Bauplattform 127 ermöglicht werden. Beispielsweise kann das Dentalobjekt 100 nach einem ersten Belichtungszyklus mittel des Positionierelements 109 auf den Kopf gestellt werden.

Durch das Positionierelement 109 können sowohl eine Reinigung als auch eine Nachvergütung des Dentalobjektes 100 optimiert werden. Durch das Positionierelement 109 kann eine Positionsänderung vor, während oder nach den ersten Reinigungs- oder Nachvergütungsschritten vorgenommen werden, ohne dass auf die Vorteile eines anwenderfreundlichen Arbeitens auf der Bauplattform 127 verzichtet werden muss. Das Dentalobjekt 100 wird hierbei an dem Positionierelement 109 gegriffen und bewegt.

Eine Umpositionierung kann im Falle von Dentalprothesenbasen beispielsweise auch für eine gute Zugänglichkeit für andere Prozessschritte sorgen, wie beispielsweise bei der Verklebung von Zähnen oder Zahnbögen. Eine Individualisierung des noch nicht nachvergüteten Materials 105 kann an dieser Stelle in einer idealen Position erfolgen. Bei einer Umpositionierung für die Nachvergütung entsteht eine risikoreduzierte Handhabung, da ein Benutzer vor einem Reinigungsschritt nicht mit dem flüssigen Material 105 in Berührung kommt. Zudem wird eine höhere Effizienz beim Bauprozess und schnellere und effizientere Reinigung erreicht.

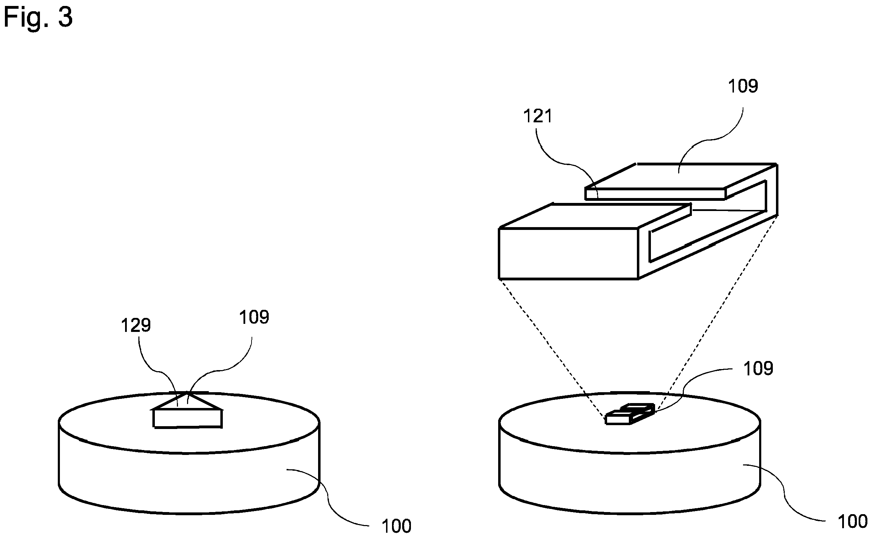

Fig. 3 zeigt eine schematische Ansicht von Positionierelementen 109 auf einer Bauplattform 127. Das Positionierelement 109 kann durch einen im Querschnitt dreieckigen Vorsprung 129 gebildet sein (links). Hierdurch kann eine rotationsfeste Befestigung des Dentalobjekts 100 erreicht werden. Das Positionierelement 109 am Dentalobjekt bildet einen Schlüssel. Ein dazu entsprechendes Positionierelement an einer Bauplattform 127 bildet ein Schlosss.

Das Positionierelement 109 kann auch einen Kanal 121 zum Schieben des Dentalobjekts 100 umfassen (rechts). Hierdurch werden ein definierter Steckkanal oder ein Schienenelement realisiert. Das Dentalobjekt 100 kann flexibel entlang des gesamten Kanals 121 verschoben werden und an der jeweiligen Position in einem vorgegebenen Winkel gedreht werden. Dass Positionierelement 109 kann auch auf einer Bauplattform 127 angeordnet sein.

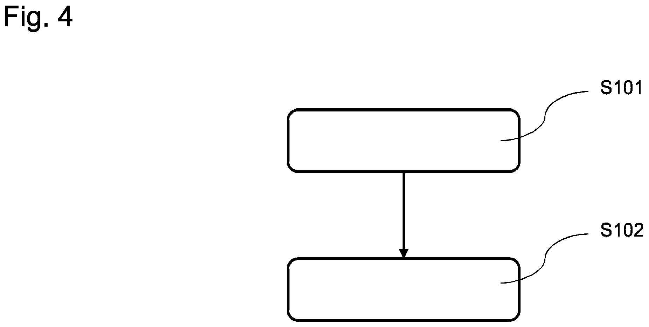

Fig. 4 zeigt ein Blockdiagramm eines Herstellungsverfahrens. Das Herstellungsverfahren umfasst den Schritt S101 eines Formens des dreidimensionalen Dentalobjektes 100 aus dem lichthärtbaren Material 105. Im Schritt S102 wird ein Teilbereich 103 des Dentalobjektes 100 mittels einer Lichtquelle 101 ausgehärtet.

Durch das Herstellungsverfahren kann eine Steuerung der Nachvergütung durchgeführt werden, die eine Materialschrumpfung, eine Biegefestigkeit oder ein Biegemodul des Dentalobjektes 100 beeinflusst. Eine Zähigkeit und eine Oberflächenreaktivität lassen sich während des Nachverarbeitungsprozesses durch partielles Belichten von Teilbereichen 103 des Dentalobjektes 100 gezielt steuern. Dadurch kann eine Bearbeitbarkeit des Dentalobjektes 100 gezielt in Teilbereichen gesteuert und verbessert werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalobjekt
- 101: Lichtquelle
- 103: Teilbereich
- 105: lichthärtbares Material
- 107: Teilbereich
- 109: Positionierelement
- 111: Sollbruchstelle
- 113: Formgebungseinrichtung
- 115: Belichtungseinrichtung
- 117: Linse
- 119: Belichtungsbereich
- 121: Kanal
- 123: Drehteller/Bewegungseinrichtung
- 125: Unterstützungsstruktur
- 127: Bauplattform
- 129: dreieckigen Vorsprung

- 200: Herstellungsgerät

- 300: Computer

## Patentansprüche

1. Herstellungsverfahren für ein Dentalobjekt (100), mit den Schritten:
- Formen (S101) eines dreidimensionalen Dentalobjektes (100) aus einem lichthärtbaren Material (105); und
- Aushärten (S102) eines Teilbereiches (103) des Dentalobjektes (100) mittels einer Lichtquelle (101).

2. Herstellungsverfahren nach Anspruch 1, wobei während des Aushärtens die Lichtquelle (101) gegenüber dem Dentalobjekt (100) und/oder das Dentalobjekt (100) gegenüber der Lichtquelle (101) bewegt wird.

3. Herstellungsverfahren nach einem der vorangehenden Ansprüche, wobei eine Lichtintensität, eine Wellenlänge und/oder eine Belichtungsdauer der Lichtquelle (101) auf Basis des Teilbereiches (103) des Dentalobjektes ausgewählt wird.

4. Herstellungsverfahren nach einem der vorangehenden Ansprüche, wobei die Größe eines Belichtungsbereiches (109) auf dem Dentalobjekt (100) einstellbar ist.

5. Herstellungsverfahren nach einem der vorangehenden Ansprüche, wobei das Aushärten des Teilbereichs (103) durch ein Belichtungsprogramm gesteuert wird.

6. Herstellungsverfahren nach Anspruch 5, wobei das Belichtungsprogramm automatisch auf Basis von auftretenden Spannungen oder Schrumpfungen und/oder der Form des Dentalobjektes (100) berechnet wird.

7. Herstellungsverfahren nach einem der vorangehenden Ansprüche, wobei ein Teilbereich (107) des Dentalobjektes (100) unbelichtet bleibt.

8. Herstellungsverfahren nach einem der vorangehenden Ansprüche, wobei das dreidimensionale Dentalobjekt (100) in einem dreidimensionalen Druckverfahren geformt wird.

9. Herstellungsverfahren nach einem der vorangehenden Ansprüche, wobei die Lichtquelle (101) ein Laser oder eine Leuchtdiode ist oder ein digitales Spiegelgerät oder eine Flüssigkristallmatrix umfasst.

10. Herstellungsverfahren nach einem der vorangehenden Ansprüche, wobei ein Positionierelement (109) zum Befestigen des dreidimensionalen Dentalobjektes (100) beim Aushärten gebildet wird.

11. Herstellungsverfahren nach Anspruch 10, wobei das Positionierelement (109) eine Sollbruchstelle (111) umfasst, die nicht ausgehärtet wird.

12. Herstellungsverfahren nach einem der Ansprüche 10 bis 11, wobei das Dentalobjekt (100) während dem Aushärten an dem Positionierelement (109) gehalten wird.

13. Herstellungsverfahren nach einem der vorangehenden Ansprüche, wobei der Schritt des Aushärtens in einer Formgebungseinrichtung (113) durchgeführt wird.

14. Herstellungsgerät (200) für ein Dentalobjekt (100), mit:
- einer Belichtungseinrichtung (115) zum Aushärten eines Teilbereiches (103) des Dentalobjektes (100) mittels einer Lichtquelle (101).

15. Computerprogramm mit Befehlen, die bei der Ausführung des Computerprogramms durch ein Herstellungsgerät (200) dieses veranlassen, ein Aushärten eines Teilbereiches (103) eines Dentalobjektes (100) mittels einer Lichtquelle (101) auszuführen.
